# EUROPÄISCHE PATENTANMELDUNG

(11) **EP 3 462 591 A1**
(43) Veröffentlichungstag der Anmeldung: **03.04.2019**
(21) Anmeldenummer: 17194124.8
(22) Anmeldetag: 29.09.2017
(51) Int. Cl.: H02M 5/458, H02M 7/00

(54) **MODULARER UMRICHTER UND MODULARES UMRICHTERSYSTEM**

(71) Anmelder: Siemens Aktiengesellschaft, 80333 München (DE)
(72) Erfinder: Fürst, Johannes, 92348 Stöckelsberg (DE); Diepold, Fabian, 93336 Altmannstein (DE)

(57) **Zusammenfassung**

Die Erfindung betrifft einen modularer Umrichter (1), aufweisend eine Anschlussbaugruppe (2), eine Steuerbaugruppe (3), eine Einspeisebaugruppe (4), eine Rückwandbaugruppe (5) und eine Lastbaugruppe (6), wobei mittels der Anschlussbaugruppe (2) ein Eingangs- und ein Ausgangssignal (7,8) und eine Eingangs- und eine Ausgangswechselspannung (9, 10) verteilbar sind, mittels einer Steuereinheit (11) der Steuerbaugruppe (3) erste Steuersignale (12) für einen Wechselrichter (15) erzeugbar sind, mittels eines Gleichrichters (13) der Einspeisebaugruppe (4) die Eingangswechselspannung (9) eines Primärnetzes (30) in eine Zwischenkreisgleichspannung (16) umwandelbar ist, mittels eines Gleichspannungszwischenkreises (17) und eines Steuersignalkreises (18) der Rückwandbaugruppe (5) die Zwischenkreisgleichspannung (16) und die ersten Steuersignale (12) für den Wechselrichter (15) verteilbar sind, mittels des Wechselrichters (15) der Lastbaugruppe (6) die Zwischenkreisgleichspannung (16) in die Ausgangswechselspannung (10) für eine Last (27) oder ein Sekundärnetz umwandelbar ist, der Wechselrichter (15) Leistungshalbleiterschalter (19) aus GaN oder InGaN aufweist, welche mit einer Sperrspannung von mindestens 400V und mit einer Taktfrequenz von mindestens 40kHz betreibbar sind und die Anschlussbaugruppe (2) und die Rückwandbaugruppe (5) jeweils mit der Steuerbaugruppe (3), der Einspeisebaugruppe (4) und der Lastbaugruppe (6) elektrisch mittels lösbarer mechanischer Verbindungen (31) verbunden ist. Ferner betrifft die Erfindung ein modulares Umrichtersystem (23) mit dem modularen Umrichter (1) und einem Umrichter-Erweiterungsmodul (24).

## Beschreibung

Die Erfindung betrifft einen modularen Umrichter, welcher eine Anschlussbaugruppe, eine Steuerbaugruppe, eine Einspeisebaugruppe, eine Rückwandbaugruppe und eine Lastbaugruppe aufweist, sowie ein modulares Umrichtersystem mit dem modularen Umrichter, einem Rückwandbus und einem Umrichter-Erweiterungsmodul.

Elektrische Umrichter, welche heute meist Leistungshalbleiterschalter bzw. Leistungsmodule mit in Brückenschaltungen angeordneten Leistungshalbleiterschaltern auf Siliziumbasis (z.B. Si oder SiC) aufweisen, benötigen zur Entwärmung bzgl. der betriebsbedingt auftretenden Wärmeverluste meist einen massiven metallischen Kühlkörper. Dies ist insbesondere auch dann gegeben, wenn die herkömmlichen Leistungshalbleiterschalter im Betrieb mit hohen Sperrspannungen, beispielsweise größer 400V, mit hohen Taktfrequenzen, beispielsweise größer 40kHz, und mit Schaltströmen von beispielsweise größer 7A betrieben werden sollen.

Die wesentlichen baulichen Bestandteile, aus denen derartige elektrische Umrichter, insbesondere Frequenzumrichter mit Gleichspannungszwischenkreis, heute gebildet werden, betreffen nur wenige grundlegende Umrichterkomponenten, wie das Leistungsteil, bestehend aus dem Leistungsmodul zur Gleichund Wechselrichtung, dem massiven metallischen Kühlkörper zur Entwärmung der Leistungshalbleiterschalter des Leistungsmoduls und der Steuereinheit zur Reglung des Wechselrichters bzw. auch des Gleichrichters (z.B. bei selbstgeführten Gleichrichtern). Diese grundlegenden Umrichterkomponenten bilden im Wesentlichen den nur in wenigen Freiheitsgraden veränderbaren Kern der elektrischen Umrichter heutiger Prägung, welcher über viele Umrichtertypen und -generationen hinweg demnach weitgehend technisch im Sinne dessen konstruktiver Freiheitsgrade unverändert bleibt.

Beispielsweise ist das Leistungsmodul dazu einerseits mechanisch meist unmittelbar mit dem massiven metallischen Kühlkörper verbunden und andererseits mit der Leistungsplatine, welche unter anderem die Ansteuerelektronik für die Leistungshalbleiterschalter enthält, möglichst unmittelbar kontaktiert.

Der massive metallische Kühlkörper übernimmt in heutigen Umrichterlösungen darüber hinaus im Allgemeinen auch die Funktion eines Umrichtergehäuses, entweder vollständig oder als Teil des Umrichtergehäuses, was die Flexibilität bei konstruktiven Anpassungen bzw. Änderungen bzgl. Schaffung weiterer Funktionalität dieser elektrischen Umrichter aufgrund der dann durchzuführenden umfangreichen Änderungen insbesondere bzgl. deren Umrichterkomponenten zusätzlich einschränkt.

Derzeit kommen für die meisten Leistungsklassen gekapselte Leistungsmodule zum Einsatz, so dass diese Leistungsmodule konstruktiv, d.h. aus Sicht des Platzbedarfs und des Wärmehaushaltes, aber auch elektrisch, d.h. aus Sicht der induktiven und ohmschen Anbindung, als zentrale Umrichterkomponenten hier hohe Entwicklungskosten für jede Gerätebaugröße und einen erheblicheren Aufwand bei der Herstellung verursachen.

Ein Problem für die Anwender ist demzufolge, dass nur eingeschränkte Möglichkeiten bestehen, die Umrichterprodukte auf die spezifischen Kundenforderungen hin anzupassen. So gibt es insbesondere für Antriebsumrichter verschiedene Einsatzbereiche und damit verbunden auch unterschiedliche elektrotechnische Anforderungen an diese elektrischen Umrichter, wie z.B. bzgl. deren Überlastfähigkeit, elektromagnetischer Verträglichkeit (EMV) und spezifischer Netzanschlusserfordernisse.

Um dennoch möglichst viele dieser Anforderungen zu erfüllen, werden die derzeit angebotenen Umrichtertypen derart ausgelegt, dass sie oftmals eine Vielzahl von Funktionen beinhalten. Damit sind sie meist überdimensioniert und kostenintensiv, was bedeutet, dass Kunden technische Funktionen mit erwerben müssen, welche nicht benötigt werden. Abgesehen davon ist auch die Bauraumgröße verbunden mit einem kompakten, flexiblen Aufbau immer entscheidender für die Eignung derartiger elektrischer Umrichter beim Einsatz in innovativen Technologien des Anlagen und Maschinenbaus.

Probleme ergeben sich hier aber beispielsweise, wenn die Steuereinheit, wie üblich, zur Reglung des Wechselrichters bzw. des Gleichrichters für alle Leistungsklassen konzipiert wurde. Bei einer Weiterentwicklung, bei Anpassungen oder Änderungen müssen hier oftmals eine Vielzahl von technisch/technologischen Funktionen der Umrichterkomponenten des elektrischen Umrichters betrachtet und überarbeitet bzw. auch vollständig neu entwickelt werden.

Ein paralleles Schalten von Leistungsmodulen beispielsweise ist in diesem Zusammenhang nur durch einen hohen Aufwand bei der Änderung der Ansteuerung des Wechselrichters bzw. des Gleichrichters insbesondere im Layout der Steuereinheit erzielbar.

Ein paralleler Betrieb von Einzelumrichtern ist beispielsweise heute kaum ohne externe Induktivitäten möglich, was von den Anwendern eine Forderung nach Integration derartiger Induktivitäten in heutige elektrische Umrichter aufkommen ließ. Für den Anwender ist diese Option aber aufgrund des über die Umrichterprodukte zu zahlenden hohen Entwicklungsund Umsetzungsaufwandes für derartige arbeitsintensive konstruktive Veränderungen doch eher wieder uninteressant, wobei auch der Zeitzyklus bis zum Vorliegen des geänderten Umrichterprodukts als recht langwierig angesehen wird.

Der Erfindung liegt daher die Aufgabe zugrunde, modular zusammenstellbare elektrische Umrichter und Umrichtersysteme bereitzustellen, welche die technisch/funktionalen Anwenderanforderungen mittels flexibel zusammenstellbarer elektronischer Baugruppen bzw. Umrichterkomponenten erfüllen und gleichzeitig einen Platzsparenderen und kompakteren Aufbau des elektrischen Umrichters auch in Kombination mit Umrichtersystemen gegenüber dem Stand der Technik ermöglichen.

Die Aufgabe wird durch einen modularen Umrichter mit den in Anspruch 1 angegebenen Merkmalen gelöst. Ferner wird die Aufgabe durch ein modulares Umrichtersystem nach Anspruch 12 gelöst.

Der Erfindung liegt unter anderem die Erkenntnis zugrunde, dass mit Einführung von Leistungshalbleiterschaltern mit hoher Bandbreite aus GaN oder InGaN, welche insbesondere mit hohen Sperrspannungen (>400V) und hohen Taktfrequenzen (>40kHz) bei Schaltströmen größer 7A betrieben werden, auf bisher zum Einsatz kommende massive metallische Kühlkörper, welche bis heute oft vollständig oder zumindest teilweise in Gehäuse-Chassis und/oder in Gehäusedeckeln der elektrischen Umrichter integriert sind, aufgrund neuer Kühlkonzepte verzichtet werden kann oder die zum Einsatz kommenden Kühlkörper zumindest bzgl. ihres Platz- und Materialbedarfs wesentlich reduziert werden können.

Dies wiederum eröffnet neue Optionen für den flexiblen Einsatz technisch/technologischer, also funktional gekapselter elektronischer Baugruppen in modularen Umrichtern oder in Umrichtersystemen mit modularen Umrichtern. Über leistungsklassendefinierte Umrichtergrenzen hinweg können die elektronischen Bauruppen für den modularen Umrichter aufwandsärmer skalierbar und damit kostengünstiger einsetzbar sein.

Durch eine kompaktere Anordnung mittels neuer Aufbaukonzepte derartiger funktional ausgebildeter elektronischer Baugruppen können sich auch neue Möglichkeiten für den Einsatz dieser modularen Umrichter in bisherigen aber auch in neuen Anwendungsbereichen ergeben.

Für die Lösung der Aufgabe wird ein modularer Umrichter vorgeschlagen, welcher eine Anschlussbaugruppe, eine Steuerbaugruppe, eine Einspeisebaugruppe, eine Rückwandbaugruppe und eine Lastbaugruppe aufweist, wobei mittels der Anschlussbaugruppe ein Eingangs- und ein Ausgangssignal und eine Eingangs- und eine Ausgangswechselspannung verteilbar sind, wobei mittels einer Steuereinheit der Steuerbaugruppe erste Steuersignale für einen Wechselrichter erzeugbar sind, wobei mittels eines Gleichrichters der Einspeisebaugruppe die Eingangswechselspannung eines Primärnetzes in eine Zwischenkreisgleichspannung umwandelbar ist, wobei mittels eines Gleichspannungszwischenkreises und eines Steuersignalkreises der Rückwandbaugruppe die Zwischenkreisgleichspannung und die ersten Steuersignale für den Wechselrichter verteilbar sind, wobei mittels des Wechselrichters der Lastbaugruppe die Zwischenkreisgleichspannung in die Ausgangswechselspannung für eine Last oder ein Sekundärnetz umwandelbar ist, wobei der Wechselrichter Leistungshalbleiterschalter aus GaN oder InGaN aufweist, welche mit einer Sperrspannung von mindestens 400V und mit einer Taktfrequenz von mindestens 40kHz betreibbar sind und wobei die Anschlussbaugruppe und die Rückwandbaugruppe jeweils mit der Steuerbaugruppe, der Einspeisebaugruppe und der Lastbaugruppe elektrisch mittels lösbarer mechanischer Verbindungen verbunden ist.

Beim Einsatz von Leistungshalbleiterschalter aus GaN oder InGaN, welche bei hohen Sperrspannungen und Taktfrequenzen im Vergleich zu Siliziumbasierten Leistungshalbleiterschaltern signifikant weniger Verlustwärme erzeugen, kann mittels neuer Kühlkonzepte auf einen massiven metallischen Kühlkörper - als das bisher den mechanischen Aufbau bestimmende und erheblichen Bauraum erfordernde zentrale Umrichterbauteil von elektrischen Umrichtern - verzichtet werden.

In vorteilhafter Weise ist erkannt worden, dass jetzt mehr Freiheitsgrad für eine Neustrukturierung einer technisch/technologisch bzw. anforderungsbedingten funktionalen Kapselung von Baugruppen möglich sind.

Mittels der funktional ausgebildeten und in ihrer Funktionsausübung gekapselten Baugruppen des erfindungsgemäßen modularen Umrichters können so abgrenzbare technische/technologische Aufgaben und dafür benötigte elektronische Bauelemente innerhalb des modularen Umrichters an den Anforderungen der Anwender skalierbar, aufwandsarm entwickelbar und kostengünstig austauschbar mit einem nunmehr kompakt realisierbaren mechanischen Aufbau des modularen Umrichters in vorteilhafter Weise umgesetzt werden.

Die vorgeschlagenen Baugruppen des modularen Umrichters bilden somit die Grundlage für ein modulares Baukastenprinzip von elektrischen Umrichtern. Jede der Baugruppen kann je nach Bedarf für sich oder im Verbund des modularen Umrichters weiterentwickelt werden.

Das betrifft nicht nur die Anpassung der technisch/technologischen Funktionalität der Baugruppen, sondern beispielsweise auch die Optimierung/ die Generierung von Einsatzgebieten des modularen Umrichters (z.B. den Betrieb von Mehrachsantrieben oder die Einspeisung in unterschiedliche elektrische Netze), die Bauraumoptimierung des modularen Umrichters, die Optimierung der Übertragung von Signalen und elektrischer Leistung, die Optimierung des Materialbedarfs bzgl. der elektronischen Bauelemente und die Optimierung der aufwandsarmen und kostengünstigen Austauschbarkeit der Baugruppen für Wartungszwecke bzw. Upgrade-Möglichkeiten.

Vorteilhafte Ausgestaltungsformen des modularen Umrichters sind in den abhängigen Ansprüchen angegeben.

Bei einer ersten vorteilhaften Ausgestaltungsform des erfindungsgemäßen modularen Umrichters weist der Gleichrichter Leistungshalbleiterschalter aus GaN oder InGaN auf, welche mit einer Sperrspannung von mindestens 400V und mit einer Taktfrequenz von mindestens 40kHz betreibbar sind.

Neben den fremdgeführten Gleichrichtern kann hier mittels der zum Einsatz kommenden Leistungshalbleiterschalter auch ein selbstgeführter Gleichrichter betrieben werden, was die Qualität der am Gleichspannungszwischenkreis erzeugbaren Zwischenkreisgleichspannung vorteilhaft erhöht.

Bei einer weiteren vorteilhaften Ausgestaltungsform des erfindungsgemäßen modularen Umrichters sind mittels der Steuereinheit der Steuerbaugruppe die zweiten Steuersignale für den Gleichrichter erzeugbar und sind mittels des Steuersignalkreises der Rückwandbaugruppe die zweiten Steuersignale für den Gleichrichter verteilbar.

Bei einer weiteren vorteilhaften Ausgestaltungsform des erfindungsgemäßen modularen Umrichters weist der modulare Umrichter eine Kondensatorbaugruppe mit einem Zwischenkreiskondensator und/oder mit einem Kommutierungskondensator auf, wobei die Kondensatorbaugruppe zumindest mit der Rückwandbaugruppe elektrisch mittels lösbarer mechanischer Verbindung verbunden ist.

Mittels der eigenständig verfügbaren und skalierbaren Kondensatorbaugruppe können verschiedene Kondensatoren in ihrer Art und Leistungsgröße für die spezifischen Einsatzbedürfnisse des modularen Umrichters in vorteilhafter Weise in Form einer aufwandsarmen Erstausrüstung bzw. Bauteilanpassung bereitgestellt werden. So gibt es Anwendungen, bei denen neben dem beispielsweise auf der Rückwandbaugruppe direkt am Gleichspannungszwischenkreis angeordneten Zwischenkreiskondensator ein Kommutierungskondensator für schnelle Kommutierungsvorgänge mittels der Kondensatorbaugruppe im modularen Umrichter angeordnet wird.

Bei einer weiteren vorteilhaften Ausgestaltungsform des erfindungsgemäßen modularen Umrichters weist der modulare Umrichter eine EMV-Baugruppe mit einem LC-Filterkreis auf, wobei die EMV-Baugruppe zumindest mit der Anschlussbaugruppe elektrisch mittels einer der lösbaren mechanischen Verbindungen verbunden ist.

Eine derartige EMV-Baugruppe kann elektrisch sowohl wechselspannungsseitig vor der Einspeisebaugruppe, gleichspannungsseitig am Gleichspannungszwischenkreis der Rückwandbaugruppe zwischen Einspeisebaugruppe und Lastbaugruppe oder auch wechselspannungsseitig an der Lastbaugruppe in vorteilhafter Art angeordnet sein.

Bei einer weiteren vorteilhaften Ausgestaltungsform des erfindungsgemäßen modularen Umrichters weist der modulare Umrichter eine weitere Einspeisebaugruppe mit einem weiteren Gleichrichter auf, wobei die weitere Einspeisebaugruppe mit der ersten Anschlussbaugruppe und der ersten Rückwandbaugruppe elektrisch mittels lösbarer mechanischer Verbindungen verbunden ist.

Mittels dieser weiteren Einspeisebaugruppe kann der modulare Umrichter z.B. in vorteilhafter Weise seine Einspeiseleistung auf der elektrischen Eingangsseite (der Einspeiseseite) des modularen Umrichters mittels Zu- und Abschaltens des weiteren Gleichrichters regulieren. Ist der weitere Gleichrichter z.B. ein selbstgeführter Gleichrichter, kann eine hohe Skalierbarkeit der Regulierung der Einspeiseleistung erzeugt werden.

Bei einer weiteren vorteilhaften Ausgestaltungsform des erfindungsgemäßen modularen Umrichters weist der modulare Umrichter eine weitere Lastbaugruppe mit einem weiteren Wechselrichter auf, wobei die weitere Lastbaugruppe mit der Anschlussbaugruppe und der Rückwandbaugruppe elektrisch mittels lösbarer mechanischer Verbindungen verbunden ist.

Mittels dieser weiteren Lastbaugruppe kann der modulare Umrichter z.B. in vorteilhafter Weise seine Ausgangsleistung auf der elektrischen Ausgangsseite (der Lastseite) des modularen Umrichters mittels Zu- und Abschaltens des weiteren Wechselrichters regulieren.

Bei einer weiteren vorteilhaften Ausgestaltungsform des erfindungsgemäßen modularen Umrichters ist mittels des Wechselrichters der Lastbaugruppe und des weiteren Wechselrichters der weiteren Lastbaugruppe gemeinsam die Last oder das Sekundärnetz betreibbar.

Bei einer weiteren vorteilhaften Ausgestaltungsform des erfindungsgemäßen modularen Umrichters ist mittels des Wechselrichters der Lastbaugruppe die Last oder das Sekundärnetz betreibbar und ist mittels des weiteren Wechselrichters der weiteren Lastbaugruppe eine weitere Last oder ein weiteres Sekundärnetz betreibbar.

Bei einer weiteren vorteilhaften Ausgestaltungsform des erfindungsgemäßen modularen Umrichters sind die lösbaren mechanischen Verbindungen als schraubenlose Steckverbindungen ausgebildet.

Diese vorteilhafte Ausbildung des erfindungsgemäßen modularen Umrichters erlaubt es, den Bauraum für die mechanischen Verbindungen der Baugruppen untereinander weiter vorteilhaft zu reduzieren. Dies ermöglicht auch eine engere Verschachtelung der Baugruppen.

Bei einer weiteren vorteilhaften Ausgestaltungsform des erfindungsgemäßen modularen Umrichters sind die Leistungshalbleiterschalter mit einem Schaltstrom von mindestens 7A betreibbar.

Für die Lösung der Aufgabe wird weiterhin ein modulares Umrichtersystem vorgeschlagen, welches einen erfindungsgemäßen modularen Umrichter, einen Rückwandbus und ein Umrichter-Erweiterungsmodul mit einer Modul-Anschlussbaugruppe, einer Modul-Koppelbaugruppe, einer Modul-Rückwandbaugruppe und einer Modul-Lastbaugruppe aufweist, wobei mittels der Modul-Anschlussbaugruppe Modul-Eingangs- und -Ausgangssignale und eine Modul-Ausgangswechselspannung verteilbar sind, wobei mittels der Modul-Koppelbaugruppe vierte Steuersignale, welche in der Steuereinheit der Steuerbaugruppe des modularen Umrichters oder in einer Modul-Steuereinheit der Modul-Koppelbaugruppe erzeugbar sind, für einen Modul-Wechselrichter verteilbar sind, wobei mittels eines Modul-Gleichspannungszwischenkreises und eines Modul-Steuersignalkreises der Modul-Rückwandbaugruppe die Modul-Zwischenkreisgleichspannung und die vierten Steuersignale für den Modul-Wechselrichter verteilbar sind, wobei mittels des Modul-Wechselrichters der Modul-Lastbaugruppe die Modul-Zwischenkreisgleichspannung in die Modul-Ausgangswechselspannung für eine Modullast oder ein Modul-Sekundärnetz umwandelbar ist, wobei Leistungshalbleiterschalter des Modul-Wechselrichters aus GaN oder InGaN sind und mit einer Sperrspannung von mindestens 400V und mit einer Taktfrequenz von mindestens 40kHz betreibbar sind und wobei die Modul-Anschlussbaugruppe und die Modul-Rückwandbaugruppe jeweils mit der Modul-Koppelbaugruppe und der Modul-Lastbaugruppe elektrisch mittels lösbarer mechanischer Modul-Verbindungen verbunden sind.

Das modulare Umrichtersystem ermöglicht eine bedarfsgerechte Erweiterung der Baugruppen des modularen Umrichters um die Modul-Baugruppen, welche in dem Umrichter-Erweiterungsmodul angeordnet sind. Dabei kann die räumliche Anordnung des modularen Umrichters und des Umrichter-Erweiterungsmoduls sowohl zentral wie auch dezentral ausgebildet sein, was lediglich einer Auslegung des Rückwandbusses bzgl. dessen Rückwandbus-Gleichspannungskreises und dessen Rückwandbus-Steuersignalkreises bedarf.

Bei einer ersten vorteilhaften Ausgestaltungsform des modularen Umrichtersystems ist mittels des Rückwandbusses über seinen Rückwandbus-Gleichspannungskreis die Zwischenkreisgleichspannung des Gleichspannungszwischenkreises des modularen Umrichters zu dem Modul-Gleichspannungszwischenkreis des Umrichter-Erweiterungsmoduls als eine Modul-Zwischenkreisgleichspannung für den Modul-Wechselrichter verteilbar und sind mittels des Rückwandbusses über seinen Rückwandbus-Steuersignalkreis die vierten Steuersignale vom Steuersignalkreis des modularen Umrichters zu dem Modul-Steuersignalkreis des Umrichter-Erweiterungsmoduls für den Modul-Wechselrichter verteilbar.

Der Rückwandbus überträgt in vorteilhafter Weise demnach nicht nur die vierten Steuersignale des Steuersignalkreises des modularen Umrichters an den Modul-Wechselrichter des Umrichter-Erweiterungsmoduls, sondern stellt dem Modul-Wechselrichter auch die Zwischenkreisgleichspannung des Gleichspannungszwischenkreises des modularen Umrichters zur Verfügung. Demnach wird neben den Steuersignalen auch die Leistung für den Modul-Wechselrichter des Umrichter-Erweiterungsmoduls von dem modularen Umrichter geliefert, welche der Gleichrichter der Einspeisebaugruppe des modularen Umrichters im Betrieb erzeugt.

Bei einer weiteren vorteilhaften Ausgestaltungsform des modularen Umrichtersystems weist das Umrichter-Erweiterungsmodul eine weitere Modul-Lastbaugruppe mit einem weiteren Modul-Wechselrichter auf, wobei die Modul-Anschlussbaugruppe und die Modul-Rückwandbaugruppe mit der weiteren Modul-Lastbaugruppe elektrisch mittels lösbarer mechanischer Modul-Verbindungen verbunden sind.

Bei einer weiteren vorteilhaften Ausgestaltungsform des modularen Umrichtersystems ist der Rückwandbus mit dem elektrischen Umrichter und dem Umrichter-Erweiterungsmodul elektrisch mittels lösbarer mechanischer Rückwandbus-Verbindungen verbunden und sind die lösbaren mechanischen Modul-Verbindungen und die lösbaren mechanischen Rückwandbus-Verbindungen als schraubenlose Steckverbindungen ausgebildet.

Diese vorteilhafte Ausbildung des erfindungsgemäßen modularen Umrichtersystems erlaubt es, den Bauraum für die mechanischen Verbindungen des modularen Umrichters mit dem Umrichter-Erweiterungsmodul vorteilhaft zu reduzieren. Dies ermöglicht auch eine engere Verschachtelung der Komponenten des modularen Umrichtersystems.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung eines elektrischen Umrichters nach dem Stand der Technik,
- FIG 2: eine erste schematische Darstellung des erfindungsgemäßen modularen Umrichters,
- FIG 3: eine weitere schematische Darstellung des erfindungsgemäßen modularen Umrichters nach FIG 2 und
- FIG 4: eine schematische Darstellung eines erfindungsgemäßen modularen Umrichtersystems mit dem modularen Umrichter nach FIG 2 und mit einem UmrichterErweiterungsmodul.

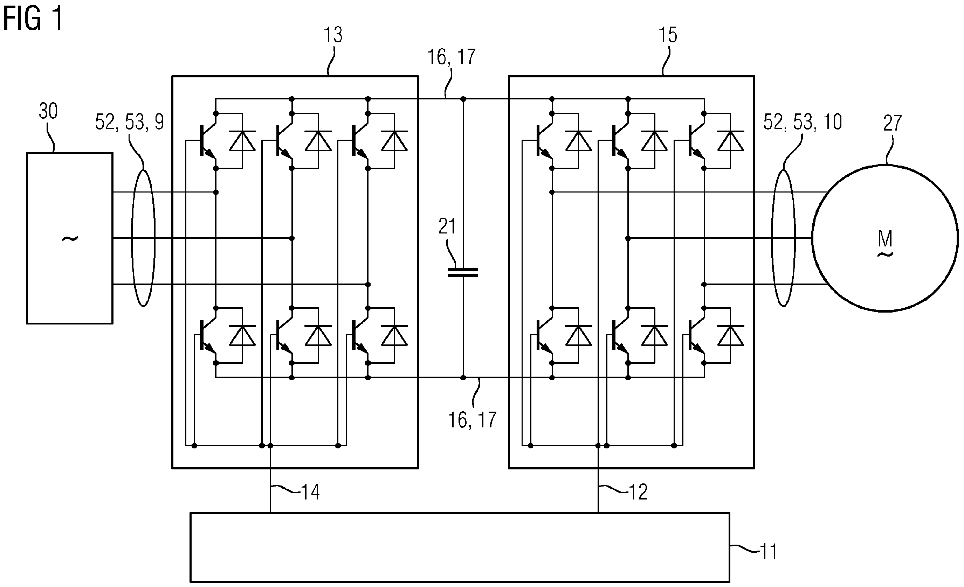

Die FIG 1 zeigt eine schematische Darstellung eines elektrischen Umrichters nach dem Stand der Technik.

Dieser elektrische Umrichter weist als Umrichterkomponenten zumindest einen Gleichrichter 13 mit Leistungshalbleiterschaltern, einen Gleichspannungszwischenkreis 17 mit einem Zwischenkreiskondensator 21, einen Wechselrichter 15 mit Leistungshalbleiterschaltern und eine Steuereinheit 11 zum Ansteuern der Leistungshalbleiterschalter auf.

Ein Primärnetz 30, welches mittels in diesem Fall dreiphasigen Wechselspannungsleitungen 53 eines Drehstromnetzes über Wechselspannungsanschlüsse 52 an den Gleichrichter 13 des elektrischen Umrichters angeschlossen ist, stellt im Betrieb eine Eingangswechselspannung 9 zum Betreiben des elektrischen Umrichters zur Verfügung.

Der Gleichrichter 13 wandelt die dreiphasige Eingangswechselspannung 9 des Primärnetzes 30 in eine Zwischenkreisgleichspannung 16 im Gleichspannungszwischenkreis 17 um. Dazu werden die Leistungshalbleiterschalter des Gleichrichters 13 mittels von der Steuereinheit 11 erzeugter zweiter Steuersignale 14 geschaltet.

Für eine ausreichende Pufferung und eine Glättung der Zwischenkreisgleichspannung 16 arbeitet der Zwischenkreiskondensator 21 am Gleichspannungszwischenkreis 17 des elektrischen Umrichters. Die Zwischenkreisgleichspannung 16 wiederum wird mittels des Wechselrichters 15 in eine dreiphasige Ausgangswechselspannung 10 eines weiteren Drehstromnetzes umgewandelt. Dazu werden die Leistungshalbleiterschalter des Wechselrichters 15 mittels von der Steuereinheit 11 erzeugter erster Steuersignale 12 geschaltet.

Der Wechselrichter 15 ist über seine Wechselspannungsanschlüsse 52 und Wechselspannungsleitungen 53 mit einer Last 27, in diesem Fall einer elektrischen Drehstrommaschine, verbunden, welche im Betrieb durch den elektrischen Umrichter mit elektrischer Energie versorgt und somit betrieben wird.

Eine Aufteilung der technisch/technologischen Funktionen eines derartigen elektrischen Umrichters erfolgt in bekannten elektrischen Umrichtern auf verschiedenen Ebenen der Hardware und Software, z.T. verteilt auf mehrere der genannten Umrichterkomponenten. Auch ist hier ein hierarchischer, struktureller Aufbau, gekapselt in eigenständigen funktionalen Baugruppen, was mit Blick auf das elektrische Schaltbild der schematischen Darstellung der FIG 1 zu erwarten wäre, im Allgemeinen nicht gegeben.

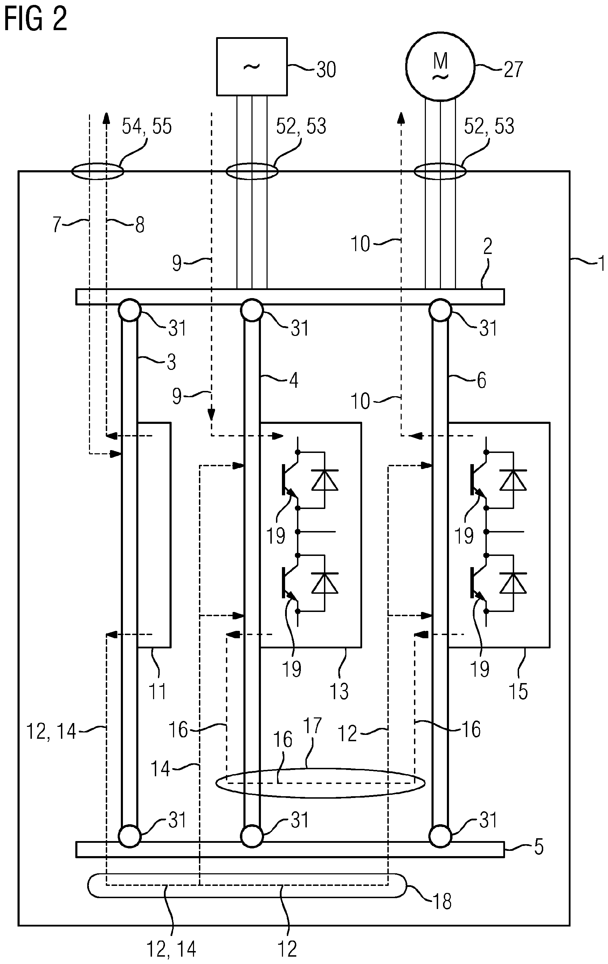

In der FIG 2 wird eine erste schematische Darstellung des erfindungsgemäßen modularen Umrichters 1 aufgezeigt.

Der modulare Umrichter 1, weist als Baugruppen bzw. Umrichterkomponenten eine Anschlussbaugruppe 2, eine Steuerbaugruppe 3, eine Einspeisebaugruppe 4, eine Rückwandbaugruppe 5 und eine Lastbaugruppe 6 auf, wobei die Anschlussbaugruppe 2 und die Rückwandbaugruppe 5 jeweils mit der Steuerbaugruppe 3, der Einspeisebaugruppe 4 und der Lastbaugruppe 6 elektrisch mittels lösbarer mechanischer Verbindungen 31 verbunden ist.

Durch die Anschlussbaugruppe 2 werden hier beispielhaft mittels Signalleitungen 55 und Signalanschlüssen 54 des modularen Umrichters 1 jeweils ein Eingangs- und ein Ausgangssignal 7,8 aufgenommen bzw. abgegeben. Über diese Signale 7,8 kann der modulare Umrichter 1 z.B. mit überlagerten Antriebsreglungen, überlagerten Netzreglungen bzw. Automatisierungssystemen, jedoch auch mit für seine Antriebsreglung ggf. notwendigen Aktuatoren (z.B. Schutzschalter) und Sensoren (z.B. Drehzahlgeber) kommunizieren und entsprechende Informationen ausgeben bzw. empfangen.

Das Eingangssignal 7, kommend von z.B. einem Sensor, wird über die Anschlussbaugruppe 2 nach innerhalb des modularen Umrichters 1 zur weiteren Verarbeitung in eine Steuereinheit 11 der Steuerbaugruppe 3 verteilt. Das Ausgangssignal 8, gehend zu z.B. einem Aktuator, wird von der Steuereinheit 11 der Steuerbaugruppe 3 kommend über die Anschlussbaugruppe 2 nach außerhalb des modularen Umrichters 1 zur weiteren Verarbeitung verteilt.

Ferner werden mittels der Anschlussbaugruppe 2 in FIG 2 beispielhaft eine Eingangs- und eine Ausgangswechselspannung 9,10 nach innerhalb und nach außerhalb des modularen Umrichters 1 verteilt.

Von einem Primärnetz 30 kommend, hier als Drehstromnetz ausgebildet, liegt eine Eingangswechselspannung 9 über hier dreiphasige Wechselspannungsleitungen 53 und Wechselspannungsanschlüsse 52 an dem modularen Umrichter 1 an und wird mittels der Anschlussbaugruppe 2 an einen Gleichrichter 13 der Einspeisebaugruppe 4 verteilt.

Die Steuereinheit 11 der Steuerbaugruppe 3 erzeugt zweite Steuersignale 14 für Leistungshalbleiterschalter 19 des Gleichrichters 13, wobei die zweiten Steuersignale 14 über einen Steuersignalkreises 18 der Rückwandbaugruppe 5 zu dem Gleichrichter 13 verteilt werden.

Der Gleichrichter 13 wandelt im Betrieb die Eingangswechselspannung 9 des Primärnetzes 30 in eine Zwischenkreisgleichspannung 16 eines Gleichspannungszwischenkreises 17, welcher auf der Rückwandbaugruppe 5 angeordnet ist, um, wobei diese Zwischenkreisgleichspannung 16 mittels des Gleichspannungszwischenkreises 17 auf der der Rückwandbaugruppe 5 an einen Wechselrichter 15 der Lastbaugruppe 6 verteilt.

Der Wechselrichters 15 der Lastbaugruppe 6 wandelt die Zwischenkreisgleichspannung 16 des Gleichspannungszwischenkreises 17 mittels der in der Steuereinheit 11 der Steuerbaugruppe 3 erzeugten ersten Steuersignale 12 für die Leistungshalbleiterschalter 19 des Wechselrichters 15 in die Ausgangswechselspannung 10 für den Betrieb einer Last 27, hier einer elektrische Drehstrommaschine, um. Die ersten Steuersignale 12 werden über den Steuersignalkreis 18 der Rückwandbaugruppe 5 zu dem Wechselrichter 15 auf der Lastbaugruppe 6 verteilt. Die Ausgangswechselspannung 10 am Wechselrichter 15 wird weiter über die Anschlussbaugruppe 2 sowie Wechselspannungsleitungen 53 und Wechselspannungsanschlüsse 52 zu der Last 27 verteilt.

Die Leistungshalbleiterschalter 19 des Gleichrichters 13 und des Wechselrichters 15 sind aus GaN oder InGaN und werden im Betrieb mit einer Sperrspannung von mindestens 400V und mit einer Taktfrequenz von mindestens 40kHz betreiben.

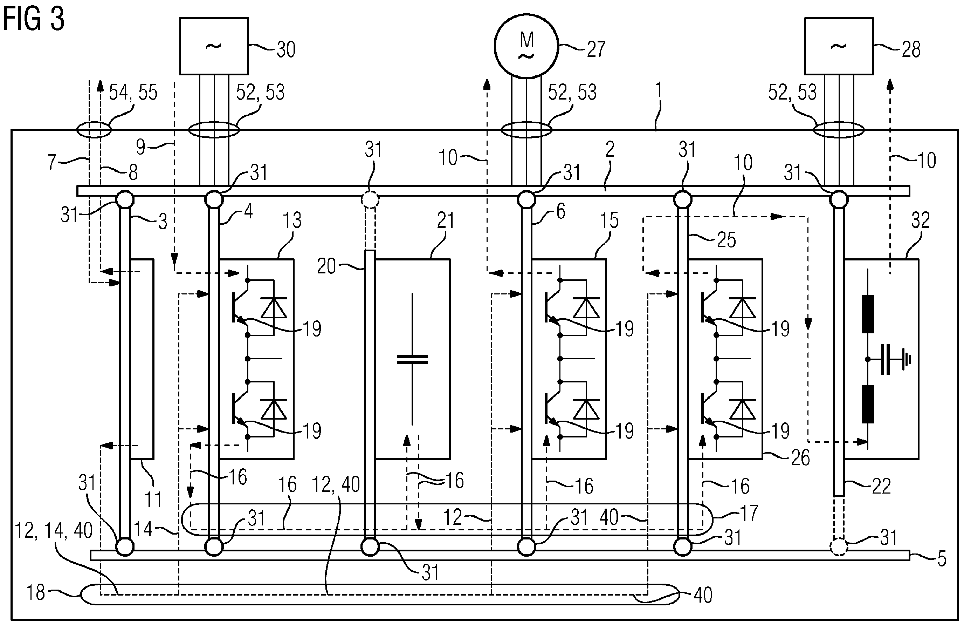

Mit FIG 3 wird eine weitere schematische Darstellung des erfindungsgemäßen modularen Umrichters 1 nach FIG 2 offenbart.

Neben den in FIG 2 aufgezeigten und funktional beschriebenen Baugruppen des modularen Umrichters 1 werden in FIG 3 zusätzlich eine Kondensatorbaugruppe 20 mit einem Zwischenkreiskondensator 21, eine weitere Lastbaugruppe 25 mit einem weiteren Wechselrichter 26 und eine EMV-Baugruppe 22 mit einem LC-Filterkreis 32 gezeigt.

Die Kondensatorbaugruppe 20 ist zumindest mit der Rückwandbaugruppe 5 elektrisch mittels lösbarer mechanischer Verbindung 31 verbunden, die weitere Lastbaugruppe 25 ist mit der Anschlussbaugruppe 2 und der Rückwandbaugruppe 5 elektrisch mittels lösbarer mechanischer Verbindungen 31 verbunden und die EMV-Baugruppe 22 ist zumindest mit der Anschlussbaugruppe 2 elektrisch mittels einer lösbaren mechanischen Verbindungen 31 verbunden.

An dem Zwischenkreiskondensator 21 der Kondensatorbaugruppe 20 liegt im Betrieb elektrisch die Zwischenkreisgleichspannung 16 des Gleichspannungszwischenkreises 17 der Rückwandbaugruppe 5 an. Baulich ist die Kondensatorbaugruppe 20 zwischen der Einspeisebaugruppe 4 mit dem Gleichrichter 13 und der Lastbaugruppe 6 mit dem Wechselrichter 15 angeordnet.

An dem weiteren Wechselrichter 26 der weiteren Lastbaugruppe 25 liegt im Betrieb elektrisch eingangsseitig ebenfalls die Zwischenkreisgleichspannung 16 des Gleichspannungszwischenkreises 17 der Rückwandbaugruppe 5 an und liegt ausgangsseitig die von dem weiteren Wechselrichter 26 selbst erzeugte Ausgangswechselspannung 10 an. Baulich ist die weitere Lastbaugruppe 25 zwischen der Lastbaugruppe 6 mit dem Wechselrichter 15 und der EMV-Baugruppe 22 mit dem LC-Filterkreis 32 angeordnet.

An dem LC-Filterkreis 32 der EMV-Baugruppe 22 liegt im Betrieb elektrisch die von dem weiteren Wechselrichter 26 erzeugte Ausgangswechselspannung 10 an. Baulich ist die EMV-Baugruppe 22 nach der weiteren Lastbaugruppe 25 mit dem weiteren Wechselrichter 26 angeordnet.

Mittels der in der Steuereinheit 11 der Steuerbaugruppe 3 erzeugten dritten Steuersignale 40 für die Leistungshalbleiterschalter 19 des weitere Wechselrichter 26 der weiteren Lastbaugruppe 25 erfolgt die Ansteuerung der Leistungshalbleiterschalter 19 für die Erzeugung der Ausgangswechselspannung 10. Diese dritten Steuersignale 40 werden von der Steuereinheit 11 der Steuerbaugruppe 3 kommend, über den Steuersignalkreis 18 der Rückwandbaugruppe 5 zu dem weitern Wechselrichter 26 auf der Lastbaugruppe 25 verteilt.

Die von dem weiteren Wechselrichter 26 der weiteren Lastbaugruppe 22 aus der Zwischenkreisspannung 16 umgewandelte Ausgangswechselspannung 10 wird über den LC-Filterkreis 32 der EMV-Baugruppe 22, die Anschlussbaugruppe 2 sowie Wechselspannungsleitungen 53 und Wechselspannungsanschlüsse 52 zu einem weiteren Sekundärnetz 28 verteilt.

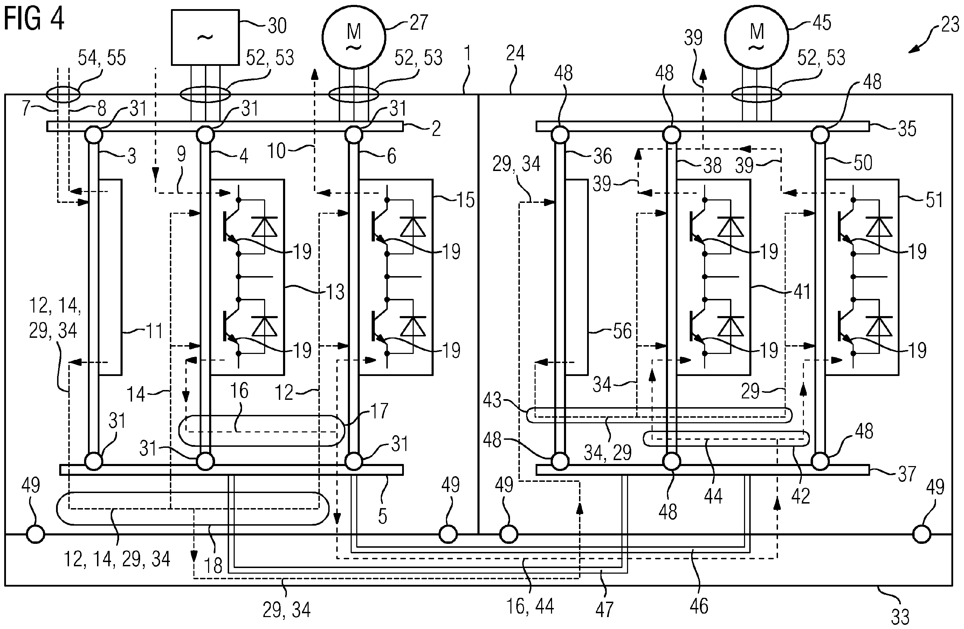

Die FIG 4 zeigt eine schematische Darstellung eines erfindungsgemäßen modularen Umrichtersystems 23 mit dem modularen Umrichter 1 nach FIG 2 und mit einem Umrichter-Erweiterungsmodul 24.

Der modulare Umrichter 1 des modularen Umrichtersystems 23 entspricht hier beispielhaft dem in FIG 2 gezeigten modularen Umrichter 1.

Ein Rückwandbus 33 ist mittels lösbarer mechanischer Verbindungen 49 sowohl mit dem modularen Umrichter 1 wie auch mit dem Umrichter-Erweiterungsmodul 24 elektrisch verbunden.

Das Umrichter-Erweiterungsmodul 24 weist als Modul-Baugruppen bzw. Umrichter-Erweiterungsmodulkomponenten eine Modul-Anschlussbaugruppe 35, eine Modul-Koppelbaugruppe 36, eine Modul-Rückwandbaugruppe 37, eine Modul-Lastbaugruppe 38 und eine weitere Modul-Lastbaugruppe 50 auf, wobei die Modul-Anschlussbaugruppe 35 und die Modul-Rückwandbaugruppe 37 jeweils mit der Modul-Koppelbaugruppe 36, der Modul-Lastbaugruppe 38 und der weiteren Modul-Lastbaugruppe 50 elektrisch mittels lösbarer mechanischer Verbindungen 48 verbunden ist.

Über einen Rückwandbus-Gleichspannungskreis 46 des Rückwandbus 33 liegt in Form einer Modul-Zwischenkreisgleichspannung 44 des Modul-Gleichspannungszwischenkreises 42 der Modul-Rückwandbaugruppe 37 an einem Modul-Wechselrichter 41 der Modul-Lastbaugruppe 38, ebenso wie an einem weiteren Modul-Wechselrichter 51 der weiteren Modul-Lastbaugruppe 50, eine vom Gleichspannungszwischenkreis 17 des modularen Umrichters 1 ausgehende Zwischenkreisgleichspannung 16 an.

Vierte Steuersignale 34 für die Leistungshalbleiterschalter 19 des Modul-Wechselrichters 41 der Modul-Lastbaugruppe 38 und/oder fünfte Steuersignale 29 für die Leistungshalbleiterschalter 19 des weiteren Modul-Wechselrichters 51 der weiteren Modul-Lastbaugruppe 50 können dabei sowohl von der Steuereinheit 11 der Steuerbaugruppe 3 des modularen Umrichters 1 wie auch von einer Modul-Steuereinheit 56 der Modul-Koppelbaugruppe 36 des Umrichter-Erweiterungsmoduls 24 erzeugt werden.

Werden die vierten und/oder die fünften Steuersignale 34,29 von der Steuereinheit 11 der Steuerbaugruppe 3 des modularen Umrichters 1 erzeugt, werden diese über den Steuersignalkreis 18 der Rückwandbaugruppe 5 des modularen Umrichters 1, einen Rückwandbus-Steuersignalkreis 47 des Rückwandbusses 33 und einen Modul-Steuersignalkreis 43 der Modul-Rückwandbaugruppe 37 entsprechend zu dem Modul-Wechselrichter 41 (die vierten Steuersignale 34) und/oder zu dem weiteren Modul-Wechselrichter 50 (die fünften Steuersignale 29) verteilt.

Werden die vierten und/oder die fünften Steuersignale 34,29 von der Modul-Steuereinheit 56 der Modul-Koppelbaugruppe 36 des Umrichter-Erweiterungsmoduls 24 erzeugt, werden diese über den Modul-Steuersignalkreis 43 der Modul-Rückwandbaugruppe 37 entsprechend zu dem Modul-Wechselrichter 41 (die vierten Steuersignale 34) und/oder zu dem weiteren Modul-Wechselrichter 50 (die fünften Steuersignale 29) verteilt.

Im Anwendungsbeispiel der FIG 4 erzeugen der Modul-Wechselrichters 41 mittels der vierten Steuersignale 34 zur Ansteuerung von dessen Leistungshalbleiterschalter 19 und der weitere Modul-Wechselrichter 51 mittels der fünften Steuersignale 29 zur Ansteuerung von dessen Leistungshalbleiterschalter 19 eine gemeinsame Ausgangswechselspannung 39.

Sowohl der Modul-Wechselrichter 41 wie auch der weitere Modul-Wechselrichter 51 sind über Wechselspannungsanschlüsse 52 und Wechselspannungsleitungen 53 des Umrichter-Erweiterungsmoduls 24 mit einer Modullast 45, in diesem Fall einer elektrischen Drehstrommaschine, elektrisch verbunden, an welcher im Betrieb dann die gemeinsame Ausgangswechselspannung 39 anliegt.

## Patentansprüche

1. Modularer Umrichter (1), aufweisend eine Anschlussbaugruppe (2), eine Steuerbaugruppe (3), eine Einspeisebaugruppe (4), eine Rückwandbaugruppe (5) und eine Lastbaugruppe (6), wobei
- mittels der Anschlussbaugruppe (2) ein Eingangs- und ein Ausgangssignal (7,8) und eine Eingangs- und eine Ausgangswechselspannung (9,10) verteilbar sind,
- mittels einer Steuereinheit (11) der Steuerbaugruppe (3) erste Steuersignale (12) für einen Wechselrichter (15) erzeugbar sind,
- mittels eines Gleichrichters (13) der Einspeisebaugruppe (4) die Eingangswechselspannung (9) eines Primärnetzes (30) in eine Zwischenkreisgleichspannung (16) umwandelbar ist,
- mittels eines Gleichspannungszwischenkreises (17) und eines Steuersignalkreises (18) der Rückwandbaugruppe (5) die Zwischenkreisgleichspannung (16) und die ersten Steuersignale (12) für den Wechselrichter (15) verteilbar sind,
- mittels des Wechselrichters (15) der Lastbaugruppe (6) die Zwischenkreisgleichspannung (16) in die Ausgangswechselspannung (10) für eine Last (27) oder ein Sekundärnetz umwandelbar ist,
- der Wechselrichter (15) Leistungshalbleiterschalter (19) aus GaN oder InGaN aufweist, welche mit einer Sperrspannung von mindestens 400V und mit einer Taktfrequenz von mindestens 40kHz betreibbar sind und
- die Anschlussbaugruppe (2) und die Rückwandbaugruppe (5) jeweils mit der Steuerbaugruppe (3), der Einspeisebaugruppe (4) und der Lastbaugruppe (6) elektrisch mittels lösbarer mechanischer Verbindungen (31) verbunden ist.

2. Modularer Umrichter (1) nach Anspruch 1, wobei der Gleichrichter (13) Leistungshalbleiterschalter (19) aus GaN oder InGaN aufweist, welche mit einer Sperrspannung von mindestens 400V und mit einer Taktfrequenz von mindestens 40kHz betreibbar sind.

3. Modularer Umrichter (1) nach Anspruch 2, wobei mittels der Steuereinheit (11) der Steuerbaugruppe (3) zweite Steuersignale (14) für den Gleichrichter (13) erzeugbar sind und wobei mittels des Steuersignalkreises (18) der Rückwandbaugruppe (5) die zweiten Steuersignale (14) für den Gleichrichter (13) verteilbar sind.

4. Modularer Umrichter (1) nach einem der vorhergehenden Ansprüche, aufweisend eine Kondensatorbaugruppe (20) mit einem Zwischenkreiskondensator (21) und/oder mit einem Kommutierungskondensator, wobei die Kondensatorbaugruppe (20) zumindest mit der Rückwandbaugruppe (5) elektrisch mittels lösbarer mechanischer Verbindung (31) verbunden ist.

5. Modularer Umrichter (1) nach einem der vorhergehenden Ansprüche, aufweisend eine EMV-Baugruppe (22) mit einem LC-Filterkreis (32), wobei die EMV-Baugruppe (22) zumindest mit der Anschlussbaugruppe (2) elektrisch mittels einer der lösbaren mechanischen Verbindungen (31) verbunden ist.

6. Modularer Umrichter nach einem der vorhergehenden Ansprüche, aufweisend eine weitere Einspeisebaugruppe mit einem weiteren Gleichrichter, wobei die weitere Einspeisebaugruppe mit der ersten Anschlussbaugruppe und der ersten Rückwandbaugruppe elektrisch mittels lösbarer mechanischer Verbindungen verbunden ist.

7. Modularer Umrichter (1) nach einem der vorhergehenden Ansprüche, aufweisend eine weitere Lastbaugruppe (25) mit einem weiteren Wechselrichter (26), wobei die weitere Lastbaugruppe (25) mit der Anschlussbaugruppe (2) und der Rückwandbaugruppe (5) elektrisch mittels lösbarer mechanischer Verbindungen (31) verbunden ist.

8. Modularer Umrichter nach Anspruch 7, wobei mittels des Wechselrichters der Lastbaugruppe und des weiteren Wechselrichters der weiteren Lastbaugruppe gemeinsam die Last oder das Sekundärnetz betreibbar ist.

9. Modularer Umrichter (1) nach Anspruch 7, wobei mittels des Wechselrichters (15) der Lastbaugruppe (6) die Last (27) oder das Sekundärnetz betreibbar ist und mittels des weiteren Wechselrichters (26) der weiteren Lastbaugruppe (25) eine weitere Last oder ein weiteres Sekundärnetz (28) betreibbar ist.

10. Modularer Umrichter (1) nach einem der vorhergehenden Ansprüche, wobei die lösbaren mechanischen Verbindungen (31) als schraubenlose Steckverbindungen ausgebildet sind.

11. Modularer Umrichter (1) nach einem der vorhergehenden Ansprüche, wobei die Leistungshalbleiterschalter (19) mit einem Schaltstrom von mindestens 7A betreibbar sind.

12. Modulares Umrichtersystem (23) mit einem modularen Umrichter (1) nach einem der Ansprüche 1 bis 11, einem Rückwandbus (33) und einem Umrichter-Erweiterungsmodul (24), welches eine Modul-Anschlussbaugruppe (35), eine Modul-Koppelbaugruppe (36), eine Modul-Rückwandbaugruppe (37) und eine Modul-Lastbaugruppe (38) aufweist, wobei
- mittels der Modul-Anschlussbaugruppe (35) Modul-Eingangsund -Ausgangssignale und eine Modul-Ausgangswechselspannung (39) verteilbar sind,
- mittels der Modul-Koppelbaugruppe (36) vierte Steuersignale (34), welche in der Steuereinheit (11) der Steuerbaugruppe (3) des modularen Umrichters (1) oder in einer Modul-Steuereinheit (56) der Modul-Koppelbaugruppe (36) erzeugbar sind, für einen Modul-Wechselrichter (41) verteilbar sind,
- mittels eines Modul-Gleichspannungszwischenkreises (42) und eines Modul-Steuersignalkreises (43) der Modul-Rückwandbaugruppe (37) die Modul-Zwischenkreisgleichspannung (44) und die vierten Steuersignale (34) für den Modul-Wechselrichter (41) verteilbar sind,
- mittels des Modul-Wechselrichters (41) der Modul-Lastbaugruppe (38) die Modul-Zwischenkreisgleichspannung (44) in die Modul-Ausgangswechselspannung (39) für eine Modullast (45) oder ein Modul-Sekundärnetz umwandelbar ist,
- Leistungshalbleiterschalter (19) des Modul-Wechselrichters (41) aus GaN oder InGaN sind und mit einer Sperrspannung von mindestens 400V und mit einer Taktfrequenz von mindestens 40kHz betreibbar sind und
- die Modul-Anschlussbaugruppe (35) und die Modul-Rückwandbaugruppe (37) jeweils mit der Modul-Koppelbaugruppe (36) und der Modul-Lastbaugruppe (38) elektrisch mittels lösbarer mechanischer Modul-Verbindungen (48) verbunden sind.

13. Modulares Umrichtersystem (23) nach Anspruch 12, wobei
- mittels des Rückwandbuses (33) über seinen Rückwandbus-Gleichspannungskreis (46) die Zwischenkreisgleichspannung (16) des Gleichspannungszwischenkreises (17) des modularen Umrichters (1) zu dem Modul-Gleichspannungszwischenkreis (42) des Umrichter-Erweiterungsmoduls (24) als eine Modul-Zwischenkreisgleichspannung (44) für den Modul-Wechselrichter (41) verteilbar ist und
- mittels des Rückwandbuses (33) über seinen Rückwandbus-Steuersignalkreis (47) die vierten Steuersignale (34) vom Steuersignalkreis (18) des modularen Umrichters (1) zu dem Modul-Steuersignalkreis (43) des Umrichter-Erweiterungsmoduls (24) für den Modul-Wechselrichter (41) verteilbar sind.

14. Modulares Umrichtersystem (23) nach einem der Ansprüche Anspruch 12 oder 13, wobei das Umrichter-Erweiterungsmodul (24) eine weitere Modul-Lastbaugruppe (50) mit einem weiteren Modul-Wechselrichter (51) aufweist und wobei die Modul-Anschlussbaugruppe (35) und die Modul-Rückwandbaugruppe (37) mit der weiteren Modul-Lastbaugruppe (50) elektrisch mittels lösbarer mechanischer Modul-Verbindungen (48) verbunden sind.

15. Modulares Umrichtersystem (23) nach einem der Ansprüche 12 bis 14, wobei der Rückwandbus (33) mit dem elektrischen Umrichter (1) und dem Umrichter-Erweiterungsmodul (24) elektrisch mittels lösbarer mechanischer Rückwandbus-Verbindungen (49) verbunden ist und wobei die lösbaren mechanischen Modul-Verbindungen (48) und die lösbaren mechanischen Rückwandbus-Verbindungen (49) als schraubenlose Steckverbindungen ausgebildet sind.
